# EUROPEAN PATENT APPLICATION

(11) **EP 3 671 181 A1**
(43) Date of publication of application: **24.06.2020**
(21) Application number: 18020661.7
(22) Date of filing: 21.12.2018
(51) Int. Cl.: G01N 21/17, B01L 3/00, G02B 21/00, G01B 9/02

(54) **SELF-MIXING PHOTOTHERMAL MICROSCOPE**

(71) Applicant: Abdus Salam International Centre for Theoretical Physics, 34151 Trieste (TS) (IT)
(72) Inventor: Cabrera Morales, Humberto Dr., 34151 Trieste (TS) (IT); Suarez-Vargas, Jose J., Dr., 34151 Trieste (TS) (IT); Barrera-Ramirez, Fredy Dr., 34151 Trieste (TS) (IT); Ramirez Miquet, Evelio, 94400 Vitry sur Seine (FR); Niemela, Joseph Dr., 34151 Trieste (TS) (IT)
(74) Representative: Dalla Vedova, Carlo

(57) **Abstract**

A highly sensitive microscope for measuring chemical and photothermal properties of scattering-free liquid and solid samples was developed. It comprises one laser source (3) for sample excitation, another laser source (2) that works both as a probe light and sensor of feedback optical signals, and a microscope system that includes a microfluidic channel (8) with the bottom surface covered with a highly reflecting layer. The microscope associates the photothermal properties of the sample with the feedback signal measured in the sensor, enabling the measurement of concentration at part per trillion levels.

## Description

The present invention is related to a novel thermal lens microscope that uses feedback in the probe laser as measurement mechanism, and allows it to be very compact and highly sensitive to concentration variations in non-reflecting liquid samples.

Self-mixing (SM) or optical feedback (OF) is a phenomenon whereby a small amount of the power emitted from a laser is re-injected back into its cavity after hitting a reflecting, usually movable, target. This re-injected light normally produces an amplitude modulation of the light emitted as it is coherently mixed with the original laser light. Consequently, the output power of the laser encodes information about the target by modulating both the amplitude and frequency of the laser [1-3]. Self-mixing laser sensors have been incorporated in multiple sensing systems [PI, P2] aiming at non-contact measurements of motion parameters, including velocity [4], displacements [5, 6] and flow rate [7].

Other kind of applications have sought to image sound waves by measuring the index of refraction (IR), using OF, in acoustically perturbed media [8], [9]. These applications sampled a large plane of the medium, a point at a time, in order to obtain a two-dimensional image of stationary acoustic waves by measuring the IR using the OF sensor. This sampling had a pixel resolution of 1 mm and it took more than an hour to acquire a single full image.

Often, we are interested instead in changes of IR at a localized micro-volume (voxel) inside the media of interest. For example, when local temperature variations change the IR other parameters of liquid and solid samples are impacted, including their heat dissipation and optical absorption that can help determine the concentration of chemical species. Thermal lens (TL) is a technique that is precisely based on the measurement of the local heat generated in a sample as the result of absorption of an excitation beam (EB), and it has been widely used in analytical chemistry and biomedicine [8,9]. Changes in the thermo-optical properties of the sample in a localized volume result in radial variations of the IR in this region, creating a dynamic "thermal lens". This lensing phenomenon can be measured by transmitting a second light, the probe beam (PB) and measuring the amount of this light that reaches a sensor located far from the sample. Obviously, the TL modifies this quantity in a precise manner, leading to its use for highly sensitive measurements. Searching to develop a portable and compact system Kitamori et al. [P3] produced a microscope system that incorporates in a single substrate the main optical components for measuring the TL effect produced in micrometer-sized channels. In their implementation however, the EB source is mechanically interrupted by using a shutter that introduces undesired vibrations to the whole system, and the optical detector adds more path length to the optical system, making it more prone to miss-alignments and susceptible to vibrations.

In the present application the inventors seek to solve some of the above problems by developing a OF-based TL microscope that incorporates the measurements in the cavity of the PB source. This has a double advantage with respect to the previous system:
1. Having reduced an important and often bulky optical component, the optical detector, which reduces the total optical circuit length, and
2. An increase in sensitivity because the OF signal is amplified within a Fabry-Perot cavity which is very sensitive to the optical re-injection.

Interestingly in the proposed invention the measurement of the OF signal is not based in the analysis of interference fringes like in previous SM systems [PI, P2], but is based on the amount of light reaching the PB laser cavity and measured by the integrated photodiode. This OF signal is directly proportional to the change in temperature in the voxel and is collected in a long cone of light due to the high numerical aperture of the objective lens. This configuration allows measurement of part per trillion levels of concentration [10], several orders of magnitude higher than other methods [11] based on OF for concentration measurement.

### PATENT REFERENCES

[P1] US 9658 113 B2, Bosch et al. (2017)
[P2] US2016/0202180A1 Rakic et al. (2016)
[P3] US 7079315 B2 Kitamori et al. (2006)

### NON-PATENT REFERENCES

[1]. T. Taimre, M. Nikolic, K. Bertling, Y. L. Lim, T. Bosch, and A. D. Rakic, "Laser feedback interferometry: a tutorial on the self-mixing effect for coherent sensing," Advances in Optics and Photonics, vol. 7, no. 3, pp. 570-631, 2015.
[2]. S. Donati and M. Norgia, "Overview of self-mixing interferometer applications to mechanical engineering," Optical Engineering, vol. 57, no. 5, pp. 051506-1-13, 2018.
[3]. G. Giuliani, M. Norgia, S. Donati, and T. Bosch, "Laser diode self-mixing technique for sensing applications," Journal of Optics A: Pure and Applied Optics, vol. 4, no. 6, pp. S283-S294, 2002.
[4] B. Gao, C. Qing, S. Yin, C. Peng, and C. Jiang, "Measurement of rotation speed based on double-beam self-mixing speckle interference," Optics Letters, vol. 43, no. 7, pp. 1531-1533, 2018.
[5] J. Xu, L. Huang, S. Yin, B. Gao, and P. Chen, "All-fiber self-mixing interferometer for displacement measurement based on the quadrature demodulation technique," Optical Review, vol. 25, no. 1, pp. 40-45, 2018.
[6] A. Ehtesham, U. Zabit, O. D. Bernal, G. Raja, and T. Bosch, "Analysis and implementation of a direct phase unwrapping method for displacement measurement using self-mixing interferometry," IEEE Sensors Journal, vol. 17, no. 22, pp. 7425-7432, 2017.
[7] R. Atashkhooei, E. E. Ramírez-Miquet, R. da Costa Moreira, A. Quotb, S. Royo, and J. Perchoux, "Optical feedback flowmetry: Impact of particle concentration on the signal processing method," IEEE Sensors Journal, vol. 18, no. 4, pp. 1457-1463, 2018.
[8] M. Franko and C. D. Tran, "Analytical thermal lens instrumentation," Review of Scientific Instruments, vol. 67, no. 1, pp. 1-18, 1996.
[9] H. Cabrera, J. Akbar, D. Korte, E. E. Ramirez-Miquet, E. Marin, J. Niemela, Z. Ebrahimpour, K. Mannatunga, and M. Franko, "Trace detection and photothermal spectral characterization by a tuneable thermal lens spectrometer with white-light excitation," Talanta, vol. 183, pp. 158-163, 2018.
[10] H. Cabrera, E. Ramírez-Miquet, J. J. Suarez-Vargas, J. F. Barrera-Ramirez, D. Korte and J. Niemela, "Pump-probe photothermal self-mixing spectrometer for highly sensitive trace detection,". To be submitted.
[11] K. Bertling, S. Han, T. Wu, C. Zhao, Y. Leng-Lim, P. Dean, S. Khanna, D. Indjin, E. Linfield, A. Davies, S. Wilson, T. Taimre and A. Rakic, "Determining Ethanol Content of Liquid Solutions Using Laser Feedback Interferometry with a Terahertz Quantum Cascade Laser". IEEE Sensors Lett. 2 (3) 3501604 (2018).

The OF-TL can be used in applications of environmental protection and detection of water pollutants like heavy metals and biologically active compounds. Combinations of high-performance liquid chromatography (HPLC) with OF-TL detection can be used to improve performance and speciation in different liquid samples.

Current applications in which our system can improve the limit of detection:
1. High-throughput sample detection in microfluidic chips (micro-HPLC or micro-ELISA).
2. Monitoring physical, chemical or biological processes, such as local phase transitions (which occur on length scales of a few nanometers and typically involve strong refractive index changes).
3. Localized heating or to regulate temperature change in biological cells, important for studying the impact of temperature on the biological activities in cells or other temperature-sensitive phenomena.
4. Direct assay of free bilirubin in serum, which can be employed as an assessment of antioxidative blood status.

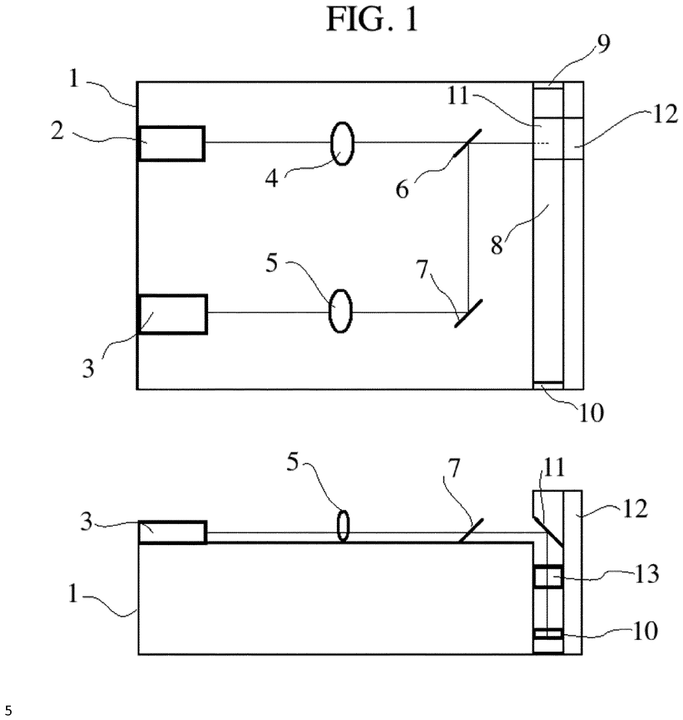

This invention has an example microscope embodied as shown in Fig. 1. It comprises a main horizontal support (1) that serves as a rigid surface to fix optical components, including the laser source (3) for excitation of the sample, the laser source that probes (2) the sample wherein an optical sensor is embedded to measure the amount of light feedback from the sample. Both laser radiation sources are transmitted through a beam expander and collimating system (4,5) to generate plane waves. These beams are combined concentrically and directed to the microscope system by the first mirror (7) and the dichroic mirror (6). The second part of this system comprises the microscope optics which in this example includes a vertical support (12) to fix and align the optical components in the path of light traveling vertically. This system incorporates the concentric excitation and probe laser lights using the second mirror (11) that changes the optical path from horizontal to vertical and directs it to the objective lens (13). The objective focuses both beams in the microfluidic channel or cell (8) containing the liquid/solid sample. This microchannel has a rectangle parallelepiped geometry, with dimensions for the separation between surfaces, for example, in the range of 50 to 1000 µm. All the microchannel's or cell surfaces are transparent to visible laser radiation, but the bottom surface is covered with a highly reflective layer, for example by depositing a gold, silver or aluminum compound layer, or by incorporating a micromirror. This highly reflecting layer allows the bottom surface of the channel to be used as a mirror to direct the probe laser beam through the same optical path, that it arrived to the sample, and to be fed-back into the probe laser source cavity to be measured by the internally embedded photodiode. In order to achieve this, the microchannel is adapted to the vertical support through micro-stage that can regulate three axes with micrometric resolution.

The effect of the excitation laser beam on the liquid sample is to rise the molecules of the fluid into an excited state, the molecules relax back into ground state by locally increasing the temperature and hence the local index of refraction is changed creating a thermal lens effect. This thermal lens is modulated by changing periodically the intensity of the excitation laser beam. In our example embodiment, the excitation laser source incorporates an electronic modulation of the laser beam intensity to avoid any mechanical shutter that can introduce unwanted vibrations to the system.

The laser probe beam passes twice through the thermal lens, once in the forward direction and then when is reflected back by the highly reflecting surface of the bottom face of the microchannel. The objective focal length is chosen such that this reflected beam is maximally collected and re-directed through the optical path to the probe laser cavity. This feedback radiation mixes in the cavity with the laser forward radiation, however because this component has a high amplitude the intensity variations due to interference become negligible, and it is this component modulated by the thermal lens that predominates. Therefore, the signal measured by the internal photodiode is linearly proportional to the back reflected light from the thermal lens. Because the vibrations of the locally excited fluid are minimal, the oscillating component due to interference is also very small with respect to light modulation produced by the thermal lens.

In this way, the self-mixing thermal lens microscope is extremely sensitive to small variations of the amount of light being feedback into the cavity. These variations are then analyzed and converted in concentration values of the molecules that absorb the excitation laser source. A standard calibration process allows to pair specific concentration values to voltage levels across the embedded photodiode, in this way a very accurate and specific instrument is obtained to measure traces at part per trillion levels.

### Description of the drawings:

Fig. 1 provides a superior view and lateral view of an example of the invention In the figure the numerals represent:
1. Horizontal main support
2. Probe laser source
3. Excitation laser source
4. Collimating optics
5. Collimating optics
6. Dichroic mirror
7. First mirror
8. Sample cell and/or Microfluidics channel
9. Input connector to microfluidic pumping system
10. Output connector to microfluidic pumping system
11. Second mirror
12. Vertical support for microfluidic and optical elements
13. Microscope objective

The self-mixing thermal lens system operates using a semiconductor laser as the probe beam (2), which is directed towards a volume of interest containing a sample of interest, which can be a cell of a microfluidic device (8). Other conventional lasers, which are sensitive to external feedback, can also be used. The sensing volume is illuminated with a second laser (3), which emission wavelength is different from the SM laser and emitted power is higher. Both lasers beam paths intercept in the sensing volume. The radiation of the second laser is absorbed by the sample (8) and the energy delivered is transformed into heat. As a result, the refractive index of the sensing volume changes and produces the TL effect. Due to the optical path changes induced by the TL, the SM laser is perturbed as the re-injected incoming external light is refracted. These changes produce a modulation in the emitted power of the probe beam, which are detectable by monitoring the laser cavity signal using the photodiode incorporated in the module or by measuring the junction voltage variations of the laser (2). Thereby, the semiconductor SM laser modulated signal is correlated to the absorbance of the tested sample, which ultimately depends on the concentration of tracers embedded within it.

The main contribution of this invention relies on the capabilities provided by the SM probe beam to detect extremely small refractive index changes given that the power fluctuations induced by the TL are naturally amplified by the cavity of probe laser. The sensitiveness of the SM sensor operating as a probe laser enables then the detection of tracers at extreme dilutions in a cell or in a microfluidic device/reactor.

Another important feature of this invention is the simplification of the instrumentation in the sensing scheme. Using a self-mixing laser sensor for probing the sensing volume avoids the use of an external photosensitive device to measure the power variations generated by the TL. This yields a more compact configuration and potentially a simpler scheme.

## Claims

1. A microscope device comprising:
A main body including:
a main horizontal support (1) to fix the optical components;
a microfluidic channel (8) wherein the main channel has the bottom surface covered with a highly reflective layer.
a laser source (3) acting to deliver an excitation light;
a laser source (2) acting as a probe light as well as a self-mixing signal sensor;
a vertical support (12) that aligns the objective, the second mirror and the microfluidic channel.
An optical system comprising:
a collimating optical system (4,5) to generate plane waves from both laser sources;
a first mirror (7) to change the optical path of the excitation beam;
a combining element (6) to form a concentric excitation and probe beam;
a second mirror (11) disposed above the microscope objective, the second mirror functioning to change the direction of the optical trajectory of the concentric excitation and probe beams from the combining element to a perpendicular direction with respect to the initial trajectory of the concentric excitation and
probe beams; and a microscope objective (13) disposed below the second mirror and above the analyzing cell.
A detecting optical system including:
An optical detector (photodiode) embedded inside the laser source (2), which acts as a probe light as well as a feedback signal sensor.

2. A method, according to claim 1, wherein a feedback optical beam, reflecting from the highly reflective surface of the micro-channel, passing twice through the sample and returning through the same optical path of the incoming probe beam, is created within the cavity of the laser source (2) and detected by the photodiode embedded in the laser cavity.

3. A method to analyze the feedback signal, generated according to claim 2, wherein variations on the amount of feedback signal are measured by the internal photodiode detector.

4. A method to determine the photothermal properties of the sample by investigating the variations in amplitude (amount of feedback signal) with time, as measured by the internally embedded photodiode; said voltage variations across the photodiode are related to the amount of trace concentration in the sample by means of a calibration process with samples with known concentration levels.
